# FASCICULE DE BREVET EUROPEEN

(11) **EP 3 056 395 B1**
(45) Date de publication et mention de la délivrance du brevet: **26.08.2020**
(21) Numéro de dépôt: 16154298.0
(22) Date de dépôt: 04.02.2016
(51) Int. Cl.: B60S 1/04, B60S 1/52

(54) **BALAI D'ESSUIE-GLACE D'UNE VITRE D'UN VEHICULE A DENSITÉ DES GICLEURS ADAPTÉE**
SCHEIBENWISCHER FÜR EINE FAHRZEUGGLASSCHEIBE MIT ANGEPASSTER DICHTE DER SPRÜHDÜSEN
WINDSCREEN-WIPER BLADE FOR A GLASS PANEL OF A VEHICLE WITH ADAPTED NOZZLE DENSITY

(30) Priorité: 16.02.2015 FR 1551245
(43) Date de publication de la demande: 17.08.2016
(73) Titulaire: Valeo Systèmes d'Essuyage, 78322 Le Mesnil Saint Denis (FR)
(72) Inventeur: THEBAULT, Denis, 63370 LEMPDES (FR)
(74) Mandataire: Valeo Vision

(56) Documents cités:
- EP-A1- 2 786 906
- DE-A1- 2 923 781
- DE-A1-102005 030 201
- DE-A1-102011 012 533
- DE-A1-102013 014 181

## Description

La présente invention concerne un balai d'essuie-glace d'une vitre d'un véhicule, telle qu'un pare-brise ou une lunette arrière d'un véhicule automobile, et plus particulièrement un couple de deux balais agissant simultanément.

Une automobile est couramment équipée d'un système d'essuie-glace pour assurer un essuyage du pare-brise et éviter que la vision qu'a le conducteur de son environnement ne soit perturbée. Un tel système comprend généralement un ou deux balais d'essuie-glace qui portent des lames d'essuyage réalisées en une matière élastique. Ces lames, positionnées pour l'une devant le conducteur et pour l'autre devant le passager, frottent contre le pare-brise et évacuent l'eau en l'amenant en dehors de leur champ de vision.

Il est également connu d'équiper le véhicule d'un système de lavage agencé pour projeter un liquide de lavage sur le pare-brise, de manière à faciliter la dissolution de salissures, et ainsi augmenter la qualité du nettoyage du pare-brise. Ce système comprend en général des moyens de projection du liquide sur le pare-brise, ces moyens de projection étant installés, dans une configuration ancienne, sur un capot du véhicule ou, plus récemment, sur le balai lui-même (voir par exemple le document DE-A-102005030201). Dans ce cas les moyens de projection de liquide sont formés par des buses ou gicleurs qui sont disposés tout le long de la lame d'essuyage du balai.

Généralement la distribution des orifices d'aspersion est uniforme sur toute la longueur du balai, chaque orifice laissant passer le même débit de liquide de lavage. Mais le choix d'une telle répartition ne permet pas d'obtenir un nettoyage suffisamment efficace pour ce type de balai. En effet, en premier lieu, lors d'un cycle de balayage, la distance parcourue par chaque point du balai, et notamment par chaque orifice d'aspersion, n'est pas la même pour tous les points. En outre la vitesse linéique de déplacement d'un point du balai lors d'un mouvement de balayage circulaire ou elliptique est plus grande pour un point situé en haut du balai que pour un point situé en bas du balai. Ainsi, lorsque le pas des orifices d'aspersion est choisi constant, la vitesse d'étalement précitée sera moins grande pour les orifices d'aspersion situés en haut du balai, et la zone de recouvrement résultante pour deux orifices voisins sera également moins grande que pour deux orifices voisins situés en bas du balai.

Une solution à ce problème a été apportée par la demande de brevet WO 2011/160952 de la demanderesse qui a consisté à modifier la distribution des orifices, en réduisant de plus en plus le pas existant entre eux, au fur et à mesure que l'on se rapproche de l'extrémité haute du balai.

Malgré cette amélioration, un autre problème demeure, en particulier dans le cas de deux balais. En effet il existe un recouvrement des zones balayées par les deux balais de façon à ne pas laisser d'endroit non essuyé au milieu du pare-brise. Il en résulte un meilleur arrosage de cette zone, par comparaison avec les zones qui ne sont pas balayées que par un seul des deux balais. Ces zones qui correspondent généralement, dans le cas de deux balais se déplaçant circulairement en parallèle l'un de l'autre, pour l'une, à l'extrémité haute du balai situé du côté du passager et, pour l'autre, à l'extrémité basse du balai situé du côté du conducteur, reçoivent moins d'eau que la zone qui est balayée par les deux balais et on y constate parfois la persistance de saletés qui obscurcissent le pare-brise. DE-A-102013014181 montre le préambule des revendications 1 et 9.

La présente invention a pour but d'apporter une solution simple, efficace et économique à ce problème, en proposant notamment une répartition des orifices d'aspersion qui assure un lavage homogène de toutes les zones du pare-brise qui voient le passage d'un balai.

L'invention est définie par les revendications 1 et 9. Elle propose un balai d'essuie-glace d'une vitre d'un véhicule comportant une extrémité haute et une extrémité basse située à proximité d'un axe d'articulation du balai et au moins un moyen de projection sur ladite vitre d'un liquide de lavage, ledit moyen comportant une pluralité de gicleurs positionnés le long d'au moins un côté dudit balai, caractérisé en ce que, sur un même côté, le pas entre au moins deux gicleurs consécutifs dans une partie du balai est plus petit que le pas entre au moins deux gicleurs consécutifs situés dans une partie plus haute sur le balai.

La réduction du pas entre gicleurs dans le haut du balai permet une augmentation de la densité de ces gicleurs dans le bas du balai, là où il est nécessaire de projeter plus de liquide lave-glace que dans une partie qui peut être balayée par le balai du conducteur et le balai du passager et qui reçoit du liquide de ces deux balais.

De façon préférentielle le balai comprend une partie inférieure et une partie supérieure, le pas entre les gicleurs de la partie inférieure étant plus court que le pas entre les gicleurs) de la partie supérieure.

Avantageusement le pas dans la partie inférieure et /ou la partie supérieure est constant.

De façon plus avantageuse le pas dans la partie inférieure est compris entre les deux tiers et le tiers du pas de la partie supérieure et, de préférence, entre la moitié et le tiers.

L'invention porte sur un ensemble constitué d'un premier balai d'essuie-glace tel que décrit ci-dessus et d'un second balai caractérisé en ce que, sur un même côté dudit second balai, le pas entre deux gicleurs consécutifs dans une partie dudit second balai est plus grand que le pas entre deux gicleurs consécutifs situés dans une partie plus haute dudit second balai.

Cette configuration est adaptée pour être montée sur un système d'essuyage dont les balais tournent dans le même sens, la partie haute du balai du passager fournissant plus de liquide vers l'extérieur de la zone essuyée.

Selon l'invention, ledit second balai comprend une partie inférieure et une partie supérieure, le pas entre les gicleurs de la partie supérieure étant plus court que le pas entre les gicleurs de la partie inférieure.

Préférentiellement le pas entre les gicleurs dans la partie supérieure dudit second balai est compris entre les deux tiers et le tiers du pas entre les gicleurs dans sa partie inférieure et, de préférence, entre la moitié et le tiers.

Dans un mode particulier de réalisation la longueur de la partie supérieure du second balai est sensiblement égale à celle de la partie inférieure du premier balai et/ou la longueur de la partie inférieure du second balai est sensiblement égale à celle de la partie supérieure du premier balai.

L'invention porte encore sur un système d'essuyage d'une surface vitrée d'un véhicule automobile comprenant un ensemble de deux balais d'essuie-glace tel que décrit ci-dessus et un moyen d'entraînement en rotation dans le même sens desdits balais contre ladite surface vitrée, lesdits balais décrivant deux tronçons de secteurs circulaires balayant une zone centrale commune, caractérisé en ce que la partie inférieure du premier balai s'étend longitudinalement jusqu'au point passant par le point le plus interne de la zone centrale commune.

On optimise ainsi la répartition des gicleurs tout le long du balai, en n'augmentant leur densité que sur la partie qui nécessite un supplément de liquide lave-glace.

Elle porte également sur un ensemble d'un premier balai d'essuie-glace tel que décrit ci-dessus, et d'un second balai caractérisé en ce que sur un même côté dudit second balai, le pas entre deux gicleurs consécutifs dans une partie dudit second balai est plus court que le pas entre deux gicleurs consécutifs situés dans une partie plus haute dudit second balai.

Cette configuration est adaptée pour être montée sur un système d'essuyage dont les balais tournent dans des sens opposés, la partie basse du balai du passager fournissant plus de liquide vers l'intérieur de la zone essuyée.

Avantageusement ledit second balai comprend une partie inférieure et une partie supérieure, le pas entre les gicleurs de la partie inférieure étant plus court que le pas entre les gicleurs de la partie supérieure.

Préférentiellement le pas entre les gicleurs dans la partie inférieure dudit second balai est compris entre les deux tiers et le tiers du pas entre les gicleurs dans sa partie supérieure et, de préférence, entre la moitié et le tiers.

Dans un mode particulier de réalisation la longueur de la partie inférieure du second balai est sensiblement égale à celle de la partie inférieure du premier balai et/ou la longueur de la partie supérieure du second balai est sensiblement égale à celle de la partie supérieure du premier balai.

L'invention porte enfin sur un système d'essuyage d'une surface vitrée d'un véhicule automobile comprenant un ensemble de deux balais d'essuie-glace tel que décrit ci-dessus, et un moyen d'entraînement en rotation dans des sens inversés desdits balais contre ladite surface vitrée, lesdits balais décrivant deux tronçons de secteurs circulaires balayant une zone centrale commune, caractérisé en ce que la partie inférieure du premier et/ou du second balai s'étend longitudinalement jusqu'au point passant par le point le plus interne de la zone centrale commune, relativement au secteur de rotation dudit balai

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue de face d'un véhicule automobile équipé d'un système de nettoyage et d'essuyage de son pare-brise ;
- la figure 2 est une vue schématique de face du pare-brise de la figure 1 et d'un système de projection de liquide de lavage à partir de deux balais d'essuie-glace, selon l'art antérieur ;
- la figure 3 est une vue schématique de face du pare-brise de la figure 1 et d'un système de projection de liquide de lavage à partir de deux balais d'essuie-glace, selon l'invention.

Il faut noter que les figures exposent l'invention de manière détaillée pour mettre en œuvre l'invention, lesdites figures pouvant bien entendu servir à mieux définir l'invention le cas échéant.

Dans la suite de la description, les dénominations longitudinales ou latérales se réfèrent à l'orientation du balai d'essuie-glace selon l'invention. En référence à la direction longitudinale, les dénominations haute et basse ou extérieure et intérieure s'apprécient par rapport à l'axe d'articulation du balai.

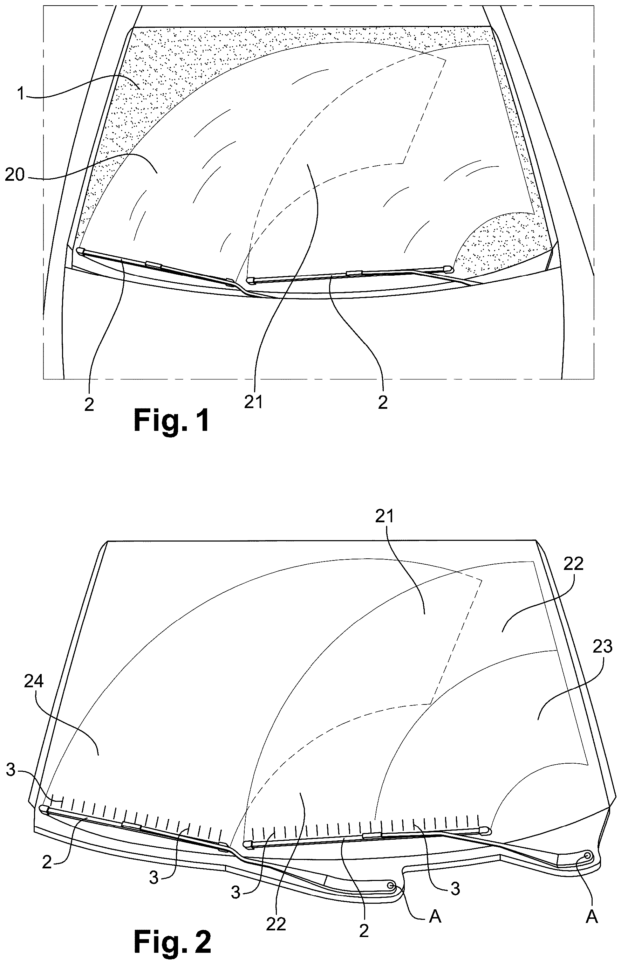

En se référant tout d'abord à la figure 1, on voit le pare-brise 1 d'un véhicule automobile et son système d'essuyage qui est composé de deux balais d'essuie-glace 2. Ces balais sont portés par des bras qui mobiles en rotation autour de deux axes d'articulation A (visibles sur la figure 2), qui sont placés en dessous du pare-brise. Chaque balai est articulé sur son bras à l'aide d'un connecteur qui autorise les divers mouvements du balai pour que celui-ci reste plaqué contre le pare-brise pendant sa rotation. Des gicleurs sont positionnés tout le long du balai, à l'exception, dans certains cas, de la zone de rattachement du balai au connecteur. En excluant cette zone éventuelle, on définit, pour la suite de la description, une partie dite partie efficace du balai, qui est celle porteuse de gicleurs et à partir de laquelle est projeté du liquide lave-glace.

Les deux balais décrivent des tranches de secteurs circulaires dont le centre est le point de fixation du balai. Ces tranches se recouvrent de façon à balayer la plus grande surface possible du pare-brise sans laisser de zone non nettoyée entre elles. Les deux balais tournent, ici, dans le même sens, autour de leurs axes d'articulation A et sont décalés latéralement, en restant sensiblement en phase l'un avec l'autre. La zone de balayage 20 ainsi formée recouvre la presque totalité du pare-brise.

On remarque qu'une zone centrale 21 de la zone de balayage 20 est essuyée par les deux balais sur laquelle ils passent successivement. Il y a donc un meilleur essuyage sur cette zone centrale que sur le reste de la zone de balayage 20.

En se référant maintenant à la figure 2 on voit des gicleurs 3 de projection du liquide lave-glace sur le pare-brise 1 qui sont répartis sur toute la longueur de chaque balai 2, du côté d'avancement de celui-ci par rapport à sa position de repos. Dans la configuration représentée toute la longueur du balai est munie de gicleurs, la partie efficace du balai étant égale ici à la totalité du balai. Selon l'art antérieur représenté ici, ces gicleurs sont répartis de façon homogène tout le long du balai, le pas entre eux étant sensiblement constant. Ils forment une rampe qui projette une raie de liquide sur le pare-brise en avant du balai, cette raie étant ensuite poussée par la lame élastique du balai sur la zone de balayage 20. La zone centrale 21 est alors mouillée deux fois pour chaque aller des balais, chacun d'eux projetant successivement du liquide sur cette zone.

La quantité de liquide reçue par la zone centrale 21 est alors trop importante pour être essuyée par le passage d'un seul balai, puisque la quantité d'eau envoyée par chaque gicleur est normalement calibrée pour pouvoir être essuyée par un seul balai. La quantité restante est alors poussée par le second balai, qui, en l'occurrence est le balai situé du côté du conducteur car il s'agit du dernier balai à passer sur la zone centrale. L'eau en excédent est entrainée par le balai du conducteur de part et d'autre de la zone centrale 21 et vient mouiller une zone plus vaste que la seule zone centrale 21, en formant un tronçon de secteur angulaire, qui est réduit en amplitude et qui est aligné avec le tronçon de secteur angulaire du balai du conducteur. L'eau en excédent permet ainsi de nettoyer une zone de propreté 22 qui s'étend, comme on peut le voir sur la figure 2, extérieurement depuis le cercle extérieur du balai du conducteur, jusque, intérieurement, au point le plus interne de la zone centrale 21.

Le nettoyage par un système d'essuyage classique laisse donc deux zones de salissures :
- une première zone de salissure 23, en bas devant le conducteur, qui fait le complément à la zone de propreté 22 du tronçon de secteur du balai du conducteur. Elle a la forme d'un tronçon de secteur angulaire qui est aligné avec le tronçon de secteur du côté conducteur, en allant du point le plus interne de la zone centrale 21 jusqu'au bas du pare-brise,
- et une seconde zone de salissure 24 qui forme un triangle curviligne et qui s'étend entre l'extrémité externe du secteur du balai du conducteur et l'extrémité externe du secteur du balai du passager.

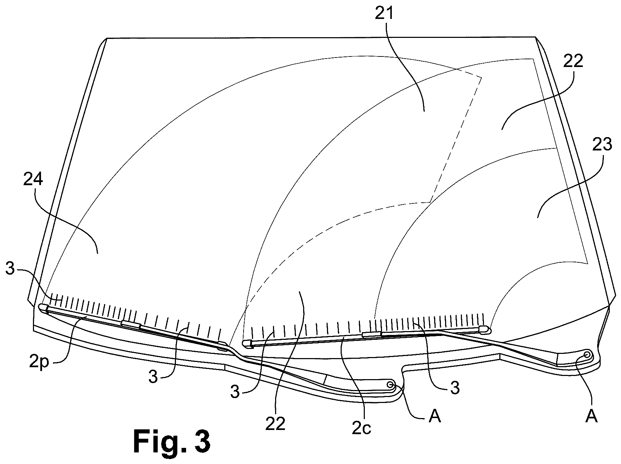

La figure 3 montre une répartition alternative des gicleurs le long de chacun des deux balais d'essuie-glace, qui tend à mieux alimenter ces deux zones de salissures et à obtenir un nettoyage correct sur toute la surface du pare-brise, sans que soit augmentée la quantité globale de liquide qui est envoyée sur le pare-brise.

Pour mieux nettoyer la première zone de salissure 23, le pas entre les gicleurs se situant en vis-à-vis de cette zone, c'est-à-dire les gicleurs situés le plus bas sur le balai du conducteur 2c, est réduit. Parallèlement le pas entre les gicleurs situés en face de la zone de propreté 22 est augmenté, de sorte que le nombre total de gicleurs sur le balai du conducteur 2c, et, partant, le débit total passant dans les gicleurs de ce balai, reste le même.

Pour mieux nettoyer la seconde zone de salissure 24, le pas entre les gicleurs qui sont situés dans la partie la plus externe du balai 2p du passager est réduit et, corrélativement, le pas entre les gicleurs qui sont situés dans la partie la plus interne de ce même balai, est augmenté. Le nombre total de gicleurs du balai 2p du passager et le débit total qui les traverse est, là encore, le même que dans les configurations de l'art antérieur.

De façon préférentielle on considère qu'une bonne répartition des gicleurs sur chacun des balais est obtenue en prenant des pas égaux entre eux dans chacune des deux parties, avec une partie à forte densité et une partie à faible densité. La densité des gicleurs 3 ne varie ainsi, sans que cette configuration soit impérative, qu'entre deux valeurs le long des deux balais, avec une densité élevée en bas du balai du conducteur 2c et en haut du balai du passager 2p, et avec une densité réduite pour les autres parties des deux balais.

Et de façon optimale, dans la partie de forte densité, la distance entre deux gicleurs consécutifs est comprise entre les deux tiers et un tiers de la distance qui existe entre deux gicleurs dans la partie à faible densité. Plus préférentiellement elle est comprise entre un demi et un tiers de cette distance. Ainsi :
- pour le balai du conducteur 2c le pas sur la partie inférieure du balai est compris entre les deux tiers et le tiers du pas sur la partie supérieure, et plus préférentiellement entre la moitié et le tiers, alors que,
- pour le balai du passager 2p c'est le pas sur la partie supérieure qui est compris entre les deux tiers et le tiers du pas sur la partie inférieure, et plus préférentiellement entre la moitié et le tiers.

La partie inférieure du balai du conducteur 2c est définie comme celle qui s'étend depuis le bas du balai jusqu'à un point qui passe par le point le plus interne de la zone centrale commune, c'est-à-dire par la position extrême qu'atteint le point inférieur du balai du passager 2p au cours de sa rotation. Et pour des raisons de facilité de fabrication, la partie supérieure du balai du passager 2p est prise égale en longueur à celle de la partie inférieure du balai du conducteur 2c.

Les figures 2 et 3 montrent des balais dont la partie efficace se confond avec la totalité du balai. Dans le cas d'un balai dont une partie, comme par exemple celle située au niveau du connecteur, ne serait pas munie de gicleurs, l'invention s'applique à ce balai comme si cette partie était éliminée et comme si les autres parties, qui forment alors la partie efficace, étaient jointives.

Le fonctionnement de l'invention se présente de la façon suivante, en distinguant le nettoyage pour chacune des zones du pare-brise :
- en ce qui concerne la zone de propreté 22, son nettoyage résulte du cumul de l'eau apporté par chacun des balais, conducteur 2c et passager 2p, et principalement par l'essuyage de cette zone par le balai du conducteur 2c. La réduction de la densité des gicleurs sur le balai du conducteur 2c, sur sa partie supérieure, permet de réduire le liquide projeté en le maintenant au niveau strictement nécessaire à un nettoyage correct de cette zone. L'eau ainsi économisée est réorientée vers les zones de salissures sous l'effet d'une augmentation de la densité des gicleurs sur les parties des balais qui les essuient.
- en ce qui concerne la première zone de salissure 23, l'augmentation du débit de liquide apporté par la densification des gicleurs sur la partie inférieure du balai du conducteur 2c permet de mieux nettoyer cette zone et de répondre de façon simple au problème posé.
- enfin, en ce qui concerne la seconde zone de salissures 24, l'augmentation du débit envoyé par la partie supérieure du balai du passager 2p améliore de façon directe le nettoyage de la tranche supérieure du secteur balayé, mais également, de façon indirecte, celui de la tranche inférieure. En effet, l'eau qui est envoyée en abondance en partie haute, s'écoule naturellement vers le bas puis est entraînée par le balai du passager 2p ce qui permet le nettoyage de la partie basse de cette seconde zone de salissures 24. Cet effet se conjugue avec celui décrit dans la demande de brevet WO 2011/160952 qui préconise d'augmenter la densité des gicleurs vers la partie haute des balais pour prendre en compte l'écart de chemin à parcourir et l'écart de surface à mouiller pour chacun des gicleurs.

En conclusion l'invention, qui se caractérise en priorité par une répartition particulière des gicleurs sur le balai du conducteur 2c, avec une forte densité en bas, peut être combinée à une grande variété de répartition des gicleurs pour le balai du passager 2p, étant entendu que celle-ci doit privilégier une densité plus forte en haut que vers le bas du balai.

L'invention a été décrite pour des balais qui se déplacent dans le même sens et qui comportent des gicleurs qui ne projettent du liquide que dans le sens aller du balai. C'est la configuration pour laquelle elle est la mieux adaptée, mais elle pourrait tout aussi bien être mise en œuvre avec des balais dont les gicleurs projettent du liquide de lavage, alternativement sur les deux côtés du balai, du côté de l'avancement de celui-ci.

Elle pourrait également être mise en œuvre pour un système d'essuyage dans lequel les deux balais tournent de façon contrarotative. La zone du pare-brise qui est balayée par les deux balais se trouve au centre du pare-brise et correspond à l'extrémité extérieure de chacun des balais. Dans ce cas les zones de plus grande densité des gicleurs sont positionnées sur le bas des balais.

## Revendications

1. Ensemble constitué d'un premier balai d'essuie-glace (2c) et d'un second balai d'essuie-glace (2p) d'une vitre de véhicule, le premier balai d'essuie-glace (2c) comportant une extrémité haute et une extrémité basse située à proximité d'un axe d'articulation (A) du balai et au moins un moyen de projection sur ladite vitre d'un liquide de lavage, ledit moyen comportant une pluralité de gicleurs (3) positionnés sur au moins un côté dudit balai, le long d'une partie dite partie efficace du balai,
**caractérisé en ce que**, sur un même côté dudit premier balai (2c), le pas entre au moins deux gicleurs (3) consécutifs dans une portion de la partie efficace dudit premier balai est plus petit que le pas entre au moins deux gicleurs (3) consécutifs situés dans une portion positionnée plus haute sur la partie efficace du premier balai, la partie efficace du premier balai (2c) comprenant une partie inférieure et une partie supérieure, le pas entre les gicleurs (3) de la partie inférieure étant plus court que le pas entre les gicleurs (3) de la partie supérieure , **et en ce que,**
sur un même côté dudit second balai (2p), le pas entre au moins deux gicleurs (3) consécutifs dans une portion de la partie efficace dudit second balai est plus grand que le pas entre au moins deux gicleurs (3) consécutifs situés dans une portion positionnée plus haute sur la partie efficace dudit second balai.

2. Ensemble selon la revendication 1, dans lequel le pas dans la partie inférieure et/ou la partie supérieure dudit premier balai (2c) est constant.

3. Ensemble selon la revendication 2, dans lequel le pas entre les gicleurs (3) dans la partie inférieure dudit premier balai (2c) est compris entre les deux tiers et le tiers du pas entre les gicleurs (3) de la partie supérieure, et de préférence entre la moitié et le tiers.

4. Ensemble selon la revendication 1 dans lequel la partie efficace dudit second balai (2p) comprend une partie inférieure et une partie supérieure, le pas entre les gicleurs (3) de la partie supérieure étant plus court que le pas entre les gicleurs (3) de la partie inférieure.

5. Ensemble selon la revendication 4, dans lequel le pas dans la partie inférieure et/ou la partie supérieure dudit second balai (2p) est constant.

6. Ensemble selon la revendication 5 dans lequel le pas entre les gicleurs (3) dans la partie supérieure dudit second balai (2p) est compris entre les deux tiers et le tiers du pas entre les gicleurs (3) dans sa partie inférieure et, de préférence entre la moitié et le tiers.

7. Ensemble selon l'une des revendications précédentes, dans lequel la longueur de la partie supérieure du second balai (2p) est sensiblement égale à celle de la partie inférieure du premier balai (2c) et/ou la longueur de la partie inférieure du second balai (2p) est sensiblement égale à celle de la partie supérieure du premier balai (2c).

8. Système d'essuyage d'une surface vitrée (1) d'un véhicule automobile comprenant un ensemble de deux balais d'essuie-glace (2c, 2p) selon l'une des revendications précédentes, et un moyen d'entraînement en rotation dans le même sens desdits balais contre ladite surface vitrée, lesdits balais décrivant deux tronçons de secteurs circulaires balayant une zone centrale commune (21), **caractérisé en ce que** la partie inférieure du premier balai (2c) s'étend longitudinalement jusqu'au point passant par le point de la zone centrale commune le plus proche de l'axe d'articulation dudit premier balai.

9. Ensemble constitué d'un premier balai d'essuie-glace (2c) et d'un second balai d'essuie-glace (2p) d'une vitre de véhicule, le premier balai d'essuie-glace (2c) comportant une extrémité haute et une extrémité basse située à proximité d'un axe d'articulation (A) du balai et au moins un moyen de projection sur ladite vitre d'un liquide de lavage, ledit moyen comportant une pluralité de gicleurs (3) positionnés sur au moins un côté dudit balai, le long d'une partie dite partie efficace du balai,
**caractérisé en ce que,** sur un même côté dudit premier balai (2c), le pas entre au moins deux gicleurs (3) consécutifs dans une portion de la partie efficace dudit premier balai est plus petit que le pas entre au moins deux gicleurs (3) consécutifs situés dans une portion positionnée plus haute sur la partie efficace du premier balai **et en ce que**,
sur un même côté dudit second balai (2p), le pas entre au moins deux gicleurs (3) consécutifs dans une portion de la partie efficace dudit second balai est plus petit que le pas entre au moins deux gicleurs (3) consécutifs situés dans une portion positionnée plus haute sur la partie efficace dudit second balai,la partie efficace dudit second balai (2p) comprenant une partie inférieure et une partie supérieure, le pas entre les gicleurs (3) de la partie inférieure étant plus court que le pas entre les gicleurs (3) de la partie supérieure.

10. Ensemble selon la revendication 9 dans lequel le pas entre les gicleurs (3) dans la partie inférieure dudit second balai (2p) est compris entre les deux tiers et le tiers du pas entre les gicleurs (3) dans sa partie supérieure et, de préférence entre la moitié et le tiers.

11. Ensemble selon l'une des revendications précédentes dans lequel la longueur de la partie inférieure du second balai (2p) est sensiblement égale à celle de la partie inférieure du premier balai (2c) et/ou la longueur de la partie supérieure du second balai (2p) est sensiblement égale à celle de la partie supérieure du premier balai (2c).

12. Système d'essuyage d'une surface vitrée (1) d'un véhicule automobile comprenant un ensemble de deux balais d'essuie-glace (2c, 2p) selon l'une des revendications 9 à 11, et un moyen d'entraînement en rotation dans des sens inversés desdits balais contre ladite surface vitrée, lesdits balais décrivant deux tronçons de secteurs circulaires balayant une zone centrale commune (21), **caractérisé en ce que** la partie inférieure du premier et/ou second balai (2c, 2p) s'étend longitudinalement jusqu'au point passant par le point de la zone centrale commune le plus proche de l'axe d'articulation dudit premier et/ou second balai.

## Patentansprüche

1. Einheit, die aus einem ersten Scheibenwischer (2c) und einem zweiten Scheibenwischer (2p) für eine Fahrzeugglasscheibe besteht, wobei der erste Scheibenwischer (2c) ein oberes Ende und ein unteres Ende, das in der Nähe einer Gelenkachse (A) des Wischers angeordnet ist, und mindestens ein Mittel zum Spritzen einer Waschflüssigkeit auf die Glasscheibe umfasst, wobei das Mittel eine Vielzahl von Sprühdüsen (3) umfasst, die auf mindestens einer Seite des Wischers entlang eines Teils, der als wirksamer Teil des Wischers bezeichnet wird, positioniert sind,
**dadurch gekennzeichnet, dass** auf einer gleichen Seite des ersten Wischers (2c) der Abstand zwischen mindestens zwei aufeinanderfolgenden Sprühdüsen (3) in einem Abschnitt des wirksamen Teils des ersten Wischers kleiner ist als der Abstand zwischen mindestens zwei aufeinanderfolgenden Sprühdüsen (3), die in einem höher gelegenen Abschnitt an dem wirksamen Teil der ersten Wischers angeordnet sind, wobei der wirksame Teil des ersten Wischers (2c) einen unteren Teil und einen oberen Teil beinhaltet, wobei der Abstand zwischen den Sprühdüsen (3) des unteren Teils kürzer ist als der Abstand zwischen den Sprühdüsen (3) des oberen Teils, **und dass**
auf einer gleichen Seite des zweiten Wischers (2p) der Abstand zwischen mindestens zwei aufeinanderfolgenden Sprühdüsen (3) in einem Abschnitt des wirksamen Teils des zweiten Wischers größer ist als der Abstand zwischen mindestens zwei aufeinanderfolgenden Sprühdüsen (3), die in einem höher gelegenen Abschnitt an dem wirksamen Teil des zweiten Wischers angeordnet sind.

2. Einheit nach Anspruch 1, wobei der Abstand in dem unteren Teil und/oder dem oberen Teil des ersten Wischers (2c) konstant ist.

3. Einheit nach Anspruch 2, wobei der Abstand zwischen den Sprühdüsen (3) in dem unteren Teil des ersten Wischers (2c) zwischen zwei Dritteln und einem Drittel des Abstands zwischen den Sprühdüsen (3) des oberen Teils und vorzugsweise zwischen einer Hälfte und einem Drittel beträgt.

4. Einheit nach Anspruch 1, wobei der wirksame Teil des zweiten Wischers (2p) einen unteren Teil und einen oberen Teil beinhaltet, wobei der Abstand zwischen den Sprühdüsen (3) des oberen Teils kürzer ist als der Abstand zwischen den Sprühdüsen (3) des unteren Teils.

5. Einheit nach Anspruch 4, wobei der Abstand in dem unteren Teil und/oder dem oberen Teil des zweiten Wischers (2p) konstant ist.

6. Einheit nach Anspruch 5, wobei der Abstand zwischen den Sprühdüsen (3) in dem oberen Teil des zweiten Wischers (2p) zwischen zwei Dritteln und einem Drittel des Abstands zwischen den Sprühdüsen (3) in seinem unteren Teil und vorzugsweise zwischen einer Hälfte und einem Drittel beträgt.

7. Einheit nach einem der vorhergehenden Ansprüche, wobei die Länge des oberen Teils des zweiten Wischers (2p) im Wesentlichen gleich der des unteren Teils des ersten Wischers (2c) ist und/oder die Länge des unteren Teils des zweiten Wischers (2p) im Wesentlichen gleich der des oberen Teils des ersten Wischers (2c) ist.

8. System zur Reinigung einer Glasoberfläche (1) eines Kraftfahrzeugs, beinhaltend eine Einheit aus zwei Scheibenwischern (2c, 2p) nach einem der vorhergehenden Ansprüche und ein Antriebsmittel zum Drehen der Wischer in der gleichen Richtung auf der Glasoberfläche, wobei die Wischer zwei kreisförmige Sektorabschnitte beschreiben, die einen gemeinsamen zentralen Bereich (21) überstreichen, **dadurch gekennzeichnet, dass** sich der untere Teil des ersten Wischers (2c) längs bis zu dem Punkt erstreckt, der durch den Punkt des gemeinsamen zentralen Bereichs, der der Gelenkachse des ersten Wischers am nächsten ist, geht.

9. Einheit, die aus einem ersten Scheibenwischer (2c) und einem zweiten Scheibenwischer (2p) für eine Fahrzeugglasscheibe besteht, wobei der erste Scheibenwischer (2c) ein oberes Ende und ein unteres Ende, das in der Nähe einer Gelenkachse (A) des Wischers angeordnet ist, und mindestens ein Mittel zum Spritzen einer Waschflüssigkeit auf die Glasscheibe umfasst, wobei das Mittel eine Vielzahl von Sprühdüsen (3) umfasst, die auf mindestens einer Seite des Wischers entlang eines Teils, der als wirksamer Teil des Wischers bezeichnet wird, positioniert sind,
**dadurch gekennzeichnet, dass** auf einer gleichen Seite des ersten Wischers (2c) der Abstand zwischen mindestens zwei aufeinanderfolgenden Sprühdüsen (3) in einem Abschnitt des wirksamen Teils des ersten Wischers kleiner ist als der Abstand zwischen mindestens zwei aufeinanderfolgenden Sprühdüsen (3), die in einem höher gelegenen Abschnitt an dem wirksamen Teil des ersten Wischers angeordnet sind, **und dass**
auf einer gleichen Seite des zweiten Wischers (2p) der Abstand zwischen mindestens zwei aufeinanderfolgenden Sprühdüsen (3) in einem Abschnitt des wirksamen Teils des zweiten Wischers kleiner ist als der Abstand zwischen mindestens zwei aufeinanderfolgenden Sprühdüsen (3), die in einem höher gelegenen Abschnitt an dem wirksamen Teil des zweiten Wischers angeordnet sind, wobei der wirksame Teil des zweiten Wischers (2p) einen unteren Teil und einen oberen Teil beinhaltet, wobei der Abstand zwischen den Sprühdüsen (3) des unteren Teils kürzer ist als der Abstand zwischen den Sprühdüsen (3) des oberen Teils.

10. Einheit nach Anspruch 9, wobei der Abstand zwischen den Sprühdüsen (3) in dem unteren Teil des zweiten Wischers (2p) zwischen zwei Dritteln und einem Drittel des Abstands zwischen den Sprühdüsen (3) in seinem oberen Teil und vorzugsweise zwischen einer Hälfte und einem Drittel beträgt.

11. Einheit nach einem der vorhergehenden Ansprüche, wobei die Länge des unteren Teils des zweiten Wischers (2p) im Wesentlichen gleich der des unteren Teils des ersten Wischers (2c) ist und/oder die Länge des oberen Teils des zweiten Wischers (2p) im Wesentlichen gleich der des oberen Teils der ersten Wischers (2c) ist.

12. System zur Reinigung einer Glasoberfläche (1) eines Kraftfahrzeugs, beinhaltend eine Einheit aus zwei Scheibenwischern (2c, 2p) nach einem der Ansprüche 9 bis 11 und ein Antriebsmittel zum Drehen der Wischer in entgegengesetzten Richtungen auf der Glasoberfläche, wobei die Wischer zwei kreisförmige Sektorabschnitte beschreiben, die einen gemeinsamen zentralen Bereich (21) überstreichen, **dadurch gekennzeichnet, dass** sich der untere Teil des ersten und/oder zweiten Wischers (2c, 2p) längs bis zu dem Punkt erstreckt, der durch den Punkt des gemeinsamen zentralen Bereichs, der der Gelenkachse des ersten und/oder zweiten Wischers am nächsten ist, geht.

## Claims

1. Assembly consisting of a first windscreen-wiper blade (2c) and a second windscreen-wiper blade (2p) for a glazing panel of a vehicle, the first windscreen-wiper blade (2c) comprising an upper end and a lower end located close to an articulation axis (A) of the blade and at least one means for spraying a washing liquid onto said glazing panel, said means comprising a plurality of sprinklers (3) positioned on at least one side of said blade, along a part referred to as the effective part of the blade,
**characterized in that,** on a same side of said first blade (2c), the spacing between at least two consecutive sprinklers (3) in a portion of the effective part of said first blade is smaller than the spacing between at least two consecutive sprinklers (3) located in a portion positioned further up on the effective part of the first blade, the effective part of the first blade (2c) comprising a lower part and an upper part, the spacing between the sprinklers (3) of the lower part being shorter than the spacing between the sprinklers (3) of the upper part, **and in that,**
on a same side of said second blade (2p), the spacing between at least two consecutive sprinklers (3) in a portion of the effective part of said second blade is larger than the spacing between at least two consecutive sprinklers (3) located in a portion positioned further up on the effective part of said second blade.

2. Assembly according to Claim 1, in which the spacing in the lower part and/or the upper part of said first blade (2c) is constant.

3. Assembly according to Claim 2, in which the spacing between the sprinklers (3) in the lower part of said first blade (2c) is between two-thirds and one-third of the spacing between the sprinklers (3) in the upper part, preferably between half and one-third.

4. Assembly according to Claim 1, in which the effective part of said second blade (2p) comprises a lower part and an upper part, the spacing between the sprinklers (3) of the upper part being shorter than the spacing between the sprinklers (3) of the lower part.

5. Assembly according to Claim 4, in which the spacing in the lower part and/or the upper part of said second blade (2p) is constant.

6. Assembly according to Claim 5, in which the spacing between the sprinklers (3) in the upper part of said second blade (2p) is between two-thirds and one-third of the spacing between the sprinklers (3) in its lower part, preferably between half and one-third.

7. Assembly according to one of the preceding claims, in which the length of the upper part of the second blade (2p) is essentially equal to that of the lower part of the first blade (2c) and/or the length of the lower part of the second blade (2p) is essentially equal to that of the upper part of the first blade (2c) .

8. Wiping system for a glazed surface (1) of a motor vehicle, comprising an assembly of two windscreen-wiper blades (2c, 2p) according to one of the preceding claims, and a means for driving said blades in rotation in the same direction against said glazed surface, said blades describing two segments of circular sectors sweeping a common central zone (21), **characterized in that** the lower part of the first blade (2c) extends longitudinally as far as the point passing through the point of the common central zone closest to the axis of articulation of said first blade.

9. Assembly consisting of a first windscreen-wiper blade (2c) and a second windscreen-wiper blade (2p) for a glazing panel of a vehicle, the first windscreen-wiper blade (2c) comprising an upper end and a lower end located close to an articulation axis (A) of the blade and at least one means for spraying a washing liquid onto said glazing panel, said means comprising a plurality of sprinklers (3) positioned on at least one side of said blade, along a part referred to as the effective part of the blade,
**characterized in that,** on a same side of said first blade (2c), the spacing between at least two consecutive sprinklers (3) in a portion of the effective part of said first blade is smaller than the spacing between at least two consecutive sprinklers (3) located in a portion positioned further up on the effective part of the first blade, **and in that,**
on a same side of said second blade (2p), the spacing between at least two consecutive sprinklers (3) in a portion of the effective part of said second blade is smaller than the spacing between at least two consecutive sprinklers (3) located in a portion positioned further up on the effective part of said second blade, the effective part of said second blade (2p) comprising a lower part and an upper part, the spacing between the sprinklers (3) of the lower part being shorter than the spacing between the sprinklers (3) of the upper part.

10. Assembly according to Claim 9, in which the spacing between the sprinklers (3) in the lower part of said second blade (2p) is between two-thirds and one-third of the spacing between the sprinklers (3) in its upper part, preferably between half and one-third.

11. Assembly according to one of the preceding claims, in which the length of the lower part of the second blade (2p) is essentially equal to that of the lower part of the first blade (2c) and/or the length of the upper part of the second blade (2p) is essentially equal to that of the upper part of the first blade (2c) .

12. Wiping system for a glazed surface (1) of a motor vehicle, comprising an assembly of two windscreen-wiper blades (2c, 2p) according to one of Claims 9 to 11, and a means for driving said blades in rotation in opposite directions against said glazed surface, said blades describing two segments of circular sectors sweeping a common central zone (21), **characterized in that** the lower part of the first and/or second blade (2c, 2p) extends longitudinally as far as the point passing through the point of the common central zone closest to the axis of articulation of said first and/or second blade.
